# EUROPEAN PATENT APPLICATION

(11) **EP 1 231 729 A2**
(43) Date of publication of application: **14.08.2002**
(21) Application number: 01107521.5
(22) Date of filing: 26.03.2001
(51) Int. Cl.: H04J 14/02

(54) **Optical network structure**

(30) Priority: 08.02.2001 US 779184
(71) Applicant: Redfern Broadband Networks Inc., Wilmington, County of Newcastle, Delaware, 19801 (US); Redfern Broadband Networks Pty Ltd, Melbourne, Victoria 3000 (AU)
(72) Inventor: Lauder, Richard, Maroubra, New South Wales 2035 (AU); Bryce, Jennifer, Potts Point, New South Wales 2011 (AU); Morgan, Trefor, Carlton, Victoria 3053 (AU); Halgren, Ross, Collaroy Plateau, New South Wales 2097 (AU)
(74) Representative: Schoppe, Fritz, Dipl.-Ing.

(57) **Abstract**

An optical ring network structure comprising two or more network elements, and a single optical fibre connection between each pair of neighbouring network elements for carrying an optical signal, wherein the ring network structure is arranged in a manner such that, in use, band allocation utilising multiplexing on each single fibre connection is chosen in a manner such that groups of wavelengths for bi-directional data transfer and for bi-directional redundant data transfer for protection respectively are provided on each single fibre connection.

## Description

### Field of the invention

The present invention relates broadly to an optical network structure and to a method of distributing data on an optical network.

### Background of the invention

The utilisation of wavelength division multiplexing (WDM) has enabled more and more data to be carried on individual transmission channels on optical connections such as on optical fibres. The focus has been to enable transmission of larger numbers of data unidirectionally along the optical connection such as the optical fibre.

At the same time, protection requirements impose bi-directional or bi-paths considerations in the design of optical networks.

To provide protection, optical ring networks such as unidirectional path switched rings (UPSR) or bi-directional line switched rings (BLSR) require two or four fibres for duplex transmission and protection between points of the optical network, wherein each optical fibre carries a single-direction optical signal.

As a result, optical ring networks have conventionally been limited in their implementation in circumstances where sufficient optical fibre resources were available, i.e. at least two optical fibre connections between neighbouring network elements of an intended optical ring network.

At least preferred embodiments of the present invention seek to provide a design which enables a more efficient use of optical fibre resources in optical networks.

### Summary of the invention

In accordance with a first aspect of the present invention there is provided an optical ring network structure comprising two or more network elements, and a single optical fibre connection between each pair of neighbouring network elements for carrying an optical signal, wherein the ring network structure is arranged in a manner such that, in use, band allocation utilising multiplexing on each single fibre connection is chosen in a manner such that groups of wavelengths for bi-directional data transfer and for bi-directional redundant data transfer for protection respectively are provided on each single fibre connection.

Accordingly, bi-directional transmission and protection can be provided through WDM connections on a single optical fibre, thereby reducing optical fibre resource requirements.

The optical ring network structure may comprise MUX/DEMUX means located at each network element for multiplexing and de-multiplexing the optical signal, depending on the propagation directions of the respective wavelengths in the optical signal with respect to the MUX/DEMUX means. The MUX/DEMUX means may comprise a 3-port circulator disposed to combine counterpropagating traffic from a unidirectional multiplexer means and to a unidirectional de-multiplexer means of the MUX/DEMUX means. Alternatively, the MUX/DEMUX means may comprise a bi-directional multiplexer/de-multiplexer means.

In a preferred embodiment, the MUX/DEMUX means comprises a dense WDM MUX/DEMUX and a coarse WDM MUX/DEMUX, wherein the coarse WDM MUX/DEMUX is disposed in a manner such that, in use, it drops and adds certain wavelength bands at the network element to and from the fibre connections to further demultiplexing and from multiplexing by the dense WDM MUX/DEMUX.

The optical ring network structure may be arranged in a manner such that the data transfer and the redundant data transfer are transmitted concurrently. In such embodiments, the ring network structure preferably comprises means for selecting between receipt of either the data transfer or the redundant data transfer located at each network element. The means for selecting may comprise a switch. Alternatively, the means for selecting may comprise amplifiers for the received data transfer and the received redundant data transfer respectively.

In another embodiment the optical ring network structure is arranged in a manner such that the redundant data transfer is transmitted only in response to a failure. In such embodiments, the optical ring network structure is advantageously arranged in a manner such that pre-emptible data is being transmitted on the groups of wavelengths provided for the redundant data transfer when the optical ring network structure is in normal operation.

The system may comprise switching means located at each network element for switching from data transfer to redundant data transfer. The switching means may be disposed between the dense WDM MUX/DEMUX and the coarse WDM MUX/DEMUX.

The propagation directions of alternating groups of wavelengths with respect to the ring network structure are preferably opposed to one another. In one embodiment, the groups of wavelengths may each comprise a single transmission channel. Accordingly, an interleaved optical signal can be carried on the network structure. Alternatively, each group of wavelengths may comprise a band of transmission channels.

In an upgraded embodiment, the optical ring network structure comprises two or more optical fibre connections between each pair of neighbouring network elements, wherein the ring network structure is arranged in a manner such that, in use, band allocation utilising multiplexing on each one of the single fibre connections between each of the pairs is chosen in a manner such that groups of wavelengths for bi-directional data transfer and for bi-directional redundant data transfer for protection respectively are provided on each single fibre connection.

In accordance with a second aspect of the present invention there is provided a method of distributing data on an optical ring network structure, the optical ring network structure comprising two or more network elements, the method comprising the steps of distributing a bi-directional multiplexed optical signal on single optical fibre connections between each pair of neighbouring network elements, wherein band allocation utilising multiplexing on each single fibre connection is performed in a manner such that groups of wavelengths for bi-directional data transfer and for bi-directional redundant data transfer for protection respectively are provided on each single fibre connection.

### Brief description of the drawings

Figure 1a - Physical topology embodying the present invention.

Figure 1b - Logical Network Connections embodying the present invention.

Figure 1c - Use of CWDM to create point to point connections between Metro and Core Hubs embodying the present invention.

Figure 1d - Four Types of Network Topology embodying the present invention.

Figure 2 - Type 1 Ring - Optical units within metro/core hub (excluding patch panel) embodying the present invention.

Figure 3 - Line interface, channel switch, and trunk interface cards embodying the present invention.

Figure 4 - Possible DWDM Configurations embodying the present invention.

Figure 5 - DWDM wavelength maps - interleaved and non-interleaved embodying the present invention.

Figure 6 - CDWM Interfaces embodying the present invention.

Figure 7 - CWDM band allocation embodying the present invention.

Figure 8 - Fibre protection using fibre switching embodying the present invention.

Figure 9 - Hub Switch embodying the present invention.

Figure 10 - Hub configuration for Type 2 Ring embodying the present invention.

Figure 11 - Fibre Protection Using Pre-amplifier embodying the present invention.

Figure 12 - Simple in-line amplifier structure embodying the present invention.

Figure 13 - First alternative in-line amplifier structure embodying the present invention.

Figure 14 - Second alternative In-line amplifier structure embodying the present invention.

Figure 15 - Power levels within a Type 3 ring embodying the present invention.

Figure 16 - In-line hub amplification embodying the present invention.

Figure 17 - Bi-directional uniamplification amplifier, symbol and implementation embodying the present invention.

Figure 18 - Management Channel Connectivity for a Single Fibre Ring embodying the present invention.

### Detailed description of the embodiments

This document describes the design of the optical transmission layer of a telecommunications network platform in which bi-directional transmission and protection can be implemented on a single fibre connection.

In the following description, the general network topology and fundamental design assumptions are first outlined. Following this, four different variations of the network topology are identified, each of which represents a specific embodiment of the present invention. The description first discloses the simplest topology - a small ring with no amplifier - and progresses in three further stages to disclose the full-scale solution with in-line and hub amplifiers. At each stage, design complexity and system functionality increase, culminating in the most flexible solution.

### 1 Network Topology

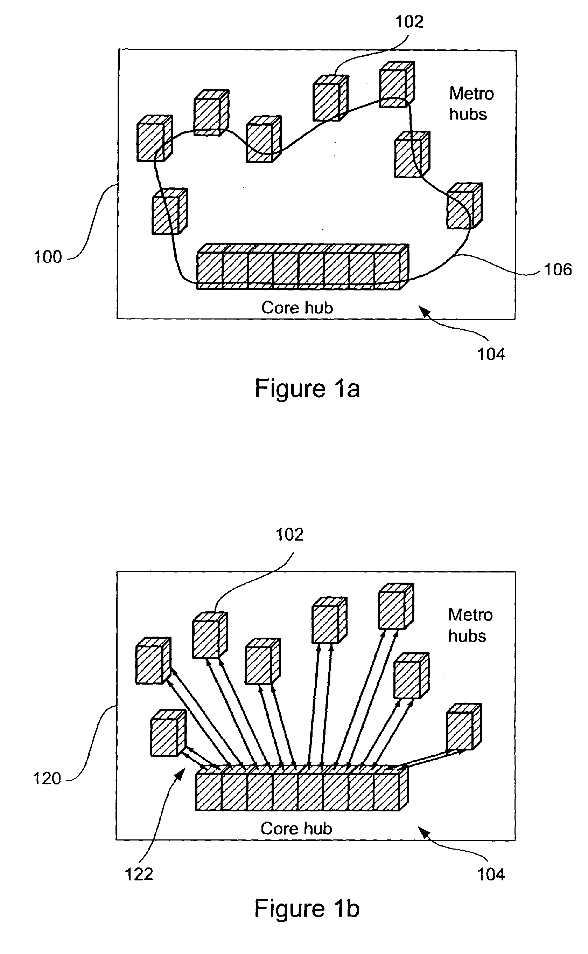

In Figures 1a to c schematic diagrams are provided illustrating the physical topology 100, the logical network connections 120, and the ring network implementation 140. The implementation uses coarse wavelength division multiplexing (CWDM) 142 to create point to point connections 122 between a plurality of metropolitan ("metro") hubs 102 and a single core hub 104 in a ring structured network 106 embodying the present invention. The specific embodiments described here pertain primarily to networks in which the total perimeter of the ring 106 is up to 500 km in length, however it will be appreciated that in many applications larger rings could be accommodated without departing from the scope of the present invention.

The ring topology 106 provides for optical path protection of the logical connections between the metro hubs 102 and the core hub 104, since each metro hub 102 is able to access the core hub 104 via two geographically diverse routes, namely the clockwise 146 and counter-clockwise 144 propagation directions of the optical fiber ring, as shown in Figure lc. The normal working path is termed the "primary" 144, and the protection path, which is used when a failure occurs on the primary path, is termed the "secondary" 146. In use, the primary path 144 will typically be the shorter of the two paths between a metro hub and the core hub, while the secondary path 146 will be the longer.

The network architecture disclosed here is capable of providing full functionality, i.e. bi-directional transmission and protection, on a single fibre. However, it is important to note that any number of additional fibres may be employed in order to provide higher transmission capacity to support a larger number of wavelength connections and/or hubs.

It will be appreciated that one or more of the additional fibres may again be implemented as providing full functionality, i.e. bi-directional transmission and protection, on a single fibre. Accordingly, the present invention can provide for network operators a more cost-effective initial system, more efficient use of fibre resources, and a more graceful upgrade path as compared to conventional architectures such as unidirectional path switch rings (UPSR's) or bi-directional line switched rings (BLSR's) which require transmission fibres to be commissioned in multiples of two or four respectively.

To provide a high degree of fault-tolerance, duplicate resources 148*a*, 148*b* are provided at the core hub 104 for each of the metro hubs 102 in the exemplary embodiment.

Each metro hub 102 in the exemplary embodiment communicates with the core hub 104 using one or more wavelengths uniquely allocated to that metro hub, and not used by any other metro hub, and that the same one or more wavelengths are used on both the primary path 144 and the secondary path 146.

Four specific embodiments based on this general topology are to be disclosed. These specific embodiments are differentiated by transmission distances and hub location. The modularity of the system is maintained from the simplest configuration to the most complex, allowing for graceful upgrades of hubs, ease of rack design, and providing the flexibility for the hub functionality to be matched with specific user requirements.

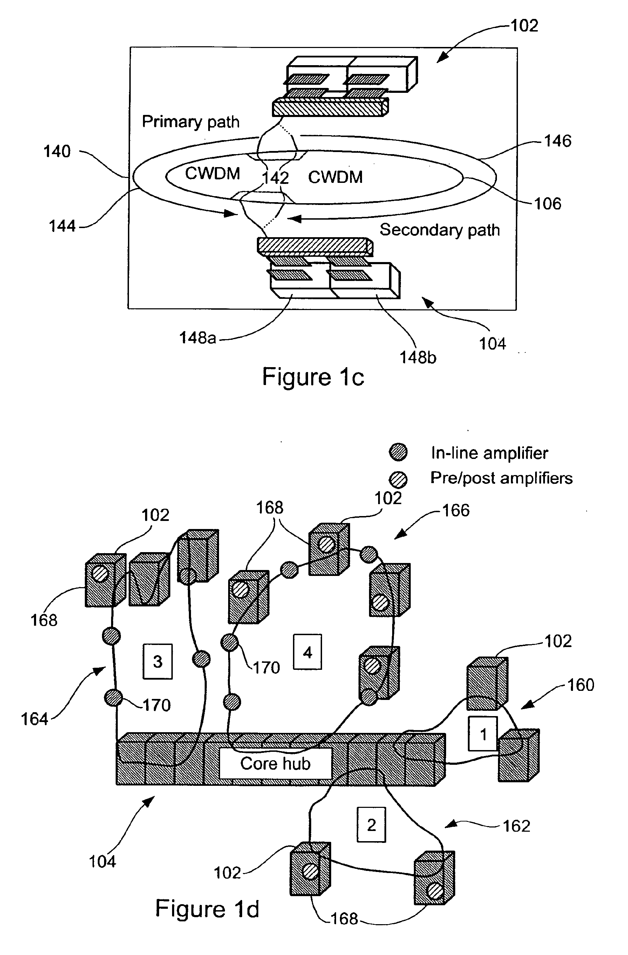

Figure 1d shows the four specific embodiments referred to as: Type 1, 160; Type 2, 162; Type 3, 164; and Type 4, 166. In Figure 1d all four embodiments are shown operating from a single core hub 104. In use, a core hub 104 may support any combination of embodiments 160, 162, 164, 166. Each embodiment implies different requirements for the design of the hubs 102, 104 and the amplification required between hubs. The defining characteristics of each embodiment are:
Type 1, 160 - small ring, in which no optical amplifiers are required;
Type 2, 162 - medium size ring, in which optical pre and/or post-amplifiers 168 may be required in the hubs, for hub traffic only;
Type 3, 164 - clustered metro hub configuration, in which a group of metro hubs may be a significant distance from the core hub but in a close cluster locally. Line amplifiers 170 are required in the links between core hub 104 and metro hubs 102 but none between adjacent metro hubs 102.
Type 4, 166 - maximally flexible solution, in which the hub spacing is large and any combination of line amplifiers 170 and/or pre- and/or post-amplifiers 168 must be supported.

Starting with the simplest embodiment 160, each increase in complexity leads to new design issues. The following sub-sections give an overview of each of the four specific embodiments 160, 162, 164, 166.

### 2 Type 1 Embodiment 160 (Figure 1d)- Small Ring with No Amplifiers

The Type 1 embodiment 160 (Figure 1d) is a small ring network in which no optical amplifiers are required.

The key characteristics of the Type 1 embodiment 160 (Figure 1d) are:
- the maximum ring diameter is limited by the optical power budget. Advantageously, components and fibre with low attenuation should be employed;
- transmission distances are short compared with the Type 2, 3 and 4 embodiments 162, 164, 166(Figure 1d). Chromatic dispersion is therefore not a limiting factor. Advantageously, some cheaper components, such as short-haul directly modulated lasers, may be employed;
- a simple passive optical switch, such as a fibre switch, can be used for protection. Advantageously, the protection switch is located between a CWDM and a DWDM and is controlled by the hub;
- except for the CWDM add-drop filters, there are no filters or amplifiers on the main fibre ring. In the event of a protection switch in which transmitted and received signals swap directions, e.g. from clockwise to counter-clockwise or vice versa, the signals will not be blocked at any components. Consequently, many different CWDM and DWDM configurations may be implemented.

In the following the hub design in the Type 1 embodiment 160 (Figure 1d) will be described in more detail.

### 2.1 Overall hub design

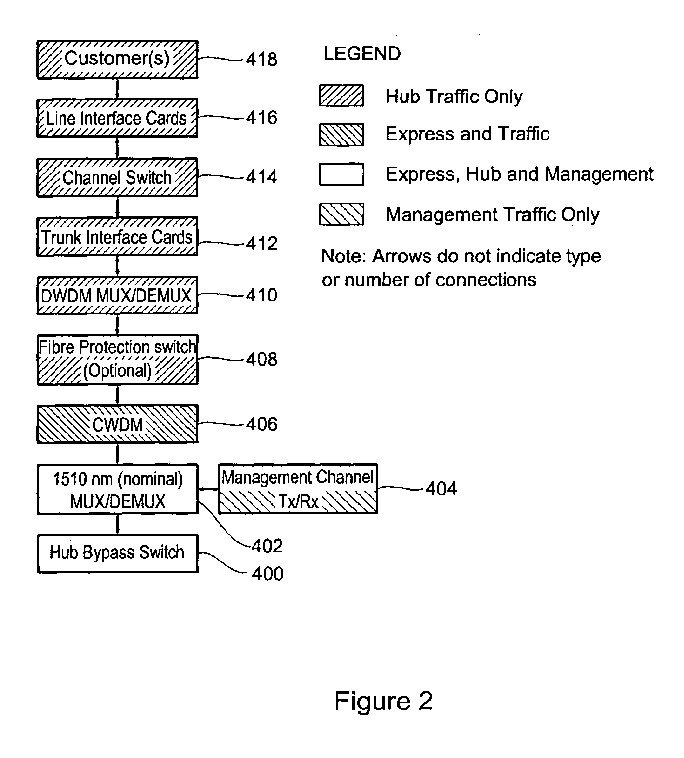

Figure 2 is a block diagram that shows schematically the major units that comprise a hub in the Type 1 embodiment 160 (Figure 1d). Figure 2 shows the logical layout for the different units the optical signal passes through. Each of these units is discussed separately in the following sections.

### 2.2 Line Interface Cards 416, Channel Switch 414, Trunk Interface Cards 412

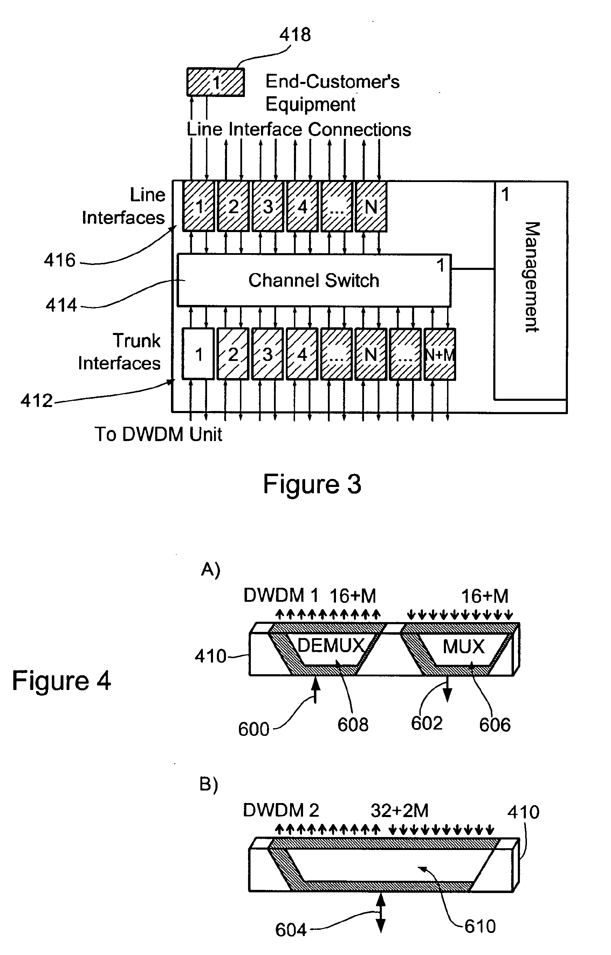

Figure 3 is a block diagram that shows schematically the configuration of the Line Interface Cards 416, Channel Switch 414 and Trunk Interface cards 412 in a hub configured for use in the Type 1 embodiment 160 (Figure 1d). Each Line Interface Card 416 provides a duplex connection to a Customer Equipment Unit 418, and is connected to a single Trunk Interface Card 412 according to the configuration of the Channel Switch 414. In the hub configuration shown in Figure 3, the hub is capable of providing M:N channel protection, in which M+N Trunk Interface Cards 412 are provided to connect only N Line Interface Cards 416. Thus up to M trunk failures can be restored by switching the corresponding Line Interface Cards 416 to an unused Trunk Interface Card 412 by reconfiguring the Channel Switch 414.

Each Trunk Interface Card 412 requires a suitable single-frequency DWDM laser for transmission of the trunk signal into the network via the DWDM MUX/DEMUX Unit 410, the optional Fibre Protection Switch 408, the CWDM Unit 406, the Management MUX/DEMUX Unit 402 and the Hub Bypass Switch 400. Advantageously in the Type 1 embodiment this laser may be a relatively low-cost device, such as a directly-modulated, temperature-stabilised distributed feedback (DFB) semiconductor laser. However it will be appreciated that more costly, higher-performance lasers could be used, and may be necessary for Trunk Interface Cards 412 which support very high transmission rates, e.g. 10 Gb/s and above, or where very close DWDM channel spacing is employed requiring greater wavelength stability.

### 2.3 DWDM MUX/DEMUX Unit 410 (Figure 2)

Returning to Figure 2, each Trunk Interface Card 412 is connected by a pair of fibres to the DWDM MUX/DEMUX Unit 410. Each fibre connecting a Trunk Interface Card 412 to the DWDM Unit 410 carries a single wavelength in one direction. In the exemplary embodiment described here, half of these wavelengths will carry data transmitted from the hub and half will carry data to be received at the hub, however it will be appreciated by persons skilled in the art that hub configurations are possible in which asymmetric transmission is provided. In the exemplary embodiment there are 16 full-duplex channels at each hub comprising 16 transmitted (Tx) wavelengths and 16 received (Rx) wavelengths, i.e. a total of 32 different wavelengths. However, it will be appreciated that a greater or smaller number of channels could be accommodated without departure from the scope of the present invention. The DWDM Unit 410 receives the 16 Tx channels from the Trunk Interface Cards 412 and multiplexes them onto a single fibre. It also receives the 16 Rx channels on a single fibre from the CWDM Unit 406 (optionally via the Fibre Protection Switch 408) and demultiplexes them to the 16 Rx fibres connected to the Trunk Interface Cards 412.

Advantageously, the hub may comprise additional Trunk Interface Cards 412 to provide a number of protection channels per direction. An example of such a configuration is shown in Figure 3, in which M:N channel protection is supported, where N = 16 for the exemplary embodiment, and M is the number of additional Trunk Interface Cards 412 provided.

Turning now to Figures 4A and 4B, which show schematically two exemplary embodiments of the DWDM MUX/DEMUX Unit 410. In the first exemplary embodiment, Figure 4A, the DWDM MUX/DEMUX Unit 410 comprises internally separate optical multiplexing means 606 and demultiplexing means 608, and comprises externally a unidirectional input fibre 600 and a unidirectional output fibre 602. In the second exemplary embodiment, Figure 4B, the DWDM MUX/DEMUX Unit 410 comprises internally a single optical multiplexing and demultiplexing means 610, and comprises externally a single bi-directional input/output fibre 604. In either embodiment the optical multiplexing and demultiplexing means may be, e.g. a free-space diffraction grating based device, or a planar lightwave circuit based device such as an arrayed waveguide grating. It will be appreciated that other embodiments of the DWDM MUX/DEMUX Unit 410, and other optical multiplexing and demultiplexing means, may be employed without departing from the scope of the present invention.

### 2.4 DWDM Wavelength Map

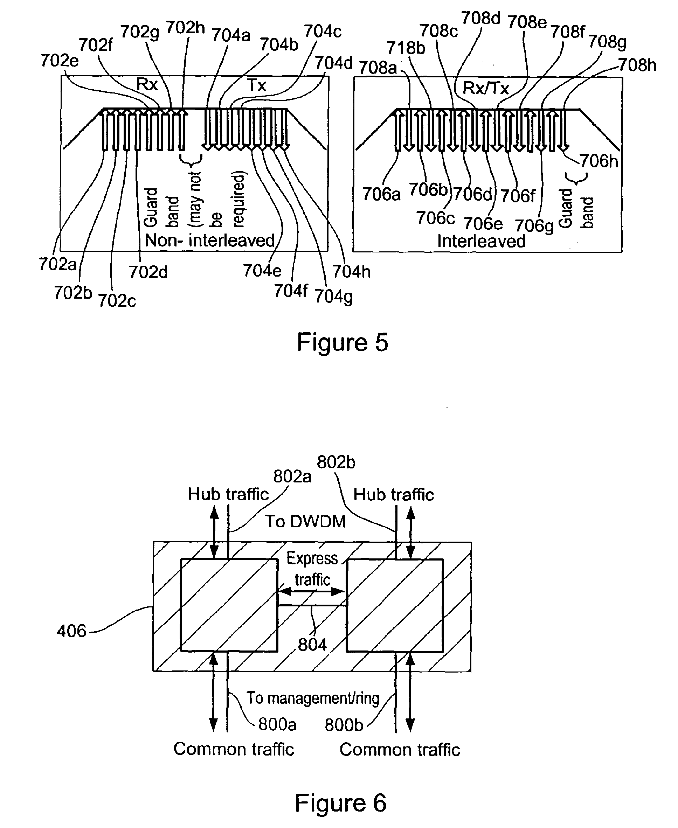

The DWDM Wavelength Map is the allocation of Tx and Rx channels to specific wavelengths for transmission on one or more fibres in the optical ring network. Figures 5A and 5B show schematically two exemplary embodiments of a DWDM Wavelength Map in which there are eight Rx channels, 702*a-h* and 706*a-h*, and eight Tx channels, 704*a-h* and 708*a-h*. It will be appreciated that different numbers of Tx and Rx channels, and other DWDM Wavelength Maps may be employed without departing from the scope of the present invention.

The exemplary embodiment shown in Figure 5A is referred to as a non-interleaved wavelength map, because the Rx wavelengths 702*a-h* occupy a wavelength band that is disjoint from the wavelength band occupied by the Tx wavelengths 704*a-h*. The exemplary embodiment shown in Figure 5B is referred to as an interleaved wavelength map, because the Rx wavelengths 706*a-h* alternate with the Tx wavelengths 708*a-h* within the same wavelength band. It will be appreciated that other wavelength maps may be constructed by combining bands comprising different numbers of interleaved and non-interleaved wavelengths without departing from the scope of the present invention.

A non-interleaved wavelength map may be used to simplify network operation and management, and relax tolerances on components to reduce costs, by grouping Rx wavelengths 702*a-h* and Tx wavelengths 704*a-h* so that they may easily be separated from each other, e.g. for routing or amplification, by simply using a coarse optical filter. An interleaved wavelength map may be used to enable Rx wavelengths 706*a-h* and Tx wavelengths 708*a-h* in a single fibre to be packed more closely together, thus increasing the total capacity of the network. This increase in packing density is achieved because crosstalk may occur, e.g. at filters and in transmission, between closely-spaced wavelengths that are propagating in the same direction, however crosstalk is minimal between wavelengths propagating in opposite directions. Thus interleaving allows the spacing between wavelengths propagating in one direction to be wide enough to minimise crosstalk (e.g. 50 GHz), whereas the spacing between adjacent counterpropagating channels is reduced to half this value (e.g. 25 GHz), effectively doubling the capacity of the fibre.

Advantageously, interleaved and non-interleaved wavelength mapping techniques may be employed in a single network in order to obtain the benefits of simplified operation and management, reduced costs, higher capacity, or a trade-off amongst these, as required.

### 2.5 CWDM Unit 406 (Figure 2)

The CWDM Unit 406 adds/drops the appropriate wavelength blocks for the hub and passes all other express traffic by the hub. Figure 6 shows schematically the logical connections to, from and within the CWDM Unit 406. The CWDM Unit 406 has two trunk fibre connections 800*a*, 800*b* to the optical fibre ring via the Management MUX/DEMUX 402 (Figure 2) and the Hub Bypass Switch 400 (Figure 2). These two trunk fibres 800a, 800b correspond to the two directions around the ring. Note that signals propagate bi-directionally on each of these fibres 800a, 800b, and that one direction around the ring corresponds to the primary path, and the other to the secondary path to provide protection. Therefore in a minimal configuration, only one transmission fibre is required between each pair of adjacent hubs. The network is therefore able to provide bi-directional transmission and protection on a ring comprising single fibre connections.

The CWDM Unit 406 also has two fibre connections 802*a*, 802*b* to the DWDM MUX/DEMUX Unit 410 (Figure 2), optionally via a Fibre Protection Switch 408. One function of the CWDM Unit 406 is to demultiplex blocks of wavelengths received on the trunk fibre connections 800*a*, 800*b* and transfer them to the hub via the fibre connections 802*a*, 802*b*. A second function of the CWDM Unit 406 is to accept blocks of wavelengths transmitted by the hub via the fibre connections 802*a*, 802*b* and multiplex them onto the trunk fibre connections 800*a*, 800*b*. A third function of the CWDM Unit 406 is to pass all trunk wavelengths received on the trunk fibre connections 800*a*, 800*b* which are not demultiplexed at the hub across to the opposite trunk fibre connection 800*b*, 800*a* via the Express Traffic path 804. Advantageously, the CWDM Unit 406 should provide high isolation, i.e. signals destined for the hub traffic fibres 802*a*, 802*b* should not appear in the Express Traffic path 804 and vice versa, and should have low insertion loss, i.e. ring traffic passing between the trunk fibres 800*a*, 800*b* via the Express Traffic path 804 should experience minimum attenuation.

### 2.6 CWDM Band Allocation

The allocation of the wavelength bands that are added and dropped by the CWDM Unit 406 (Figure 2) determines the logical connectivity of the network and the number of channels allocated to the hubs. A number of exemplary CWDM Band Allocation schemes are now disclosed. These exemplary schemes are based on using the conventional transmission band, referred to as "C-Band", which spans the wavelength range from around 1530 nm to 1560 nm, or additionally using the long-wavelength transmission band, referred to as "L-Band", which spans the wavelength range from around 1580 nm to 1610 nm. In these exemplary allocation schemes the wavelength spacing is assumed to be 50 GHz (approximately 0.4 nm). It is further assumed that each hub comprises 16 Trunk Interface Cards 412 (Figure 2) and 16 Line Interface Cards 416 (Figure 2), and thus requires 16 Tx wavelengths and 16 Rx wavelengths. It will be appreciated that other transmission bands, alternative wavelength spacings, and hubs with different numbers of Trunk Interface Cards 412 (Figure 2) and Line Interface Cards 416 (Figure 2), may be employed without departing from the scope of the present invention.

The CWDM Band Allocation determines the number of hubs that can transmit and receive on a single fibre ring. The options available include:
- using C-Band;
- using C+L-Bands;
- using a single continuous wavelength band comprising both Tx wavelengths and Rx wavelengths;
- using separate wavelength bands comprising Tx wavelengths and Rx wavelengths.

If C-Band only is used then two hubs may be accommodated on a single fibre. If C+L-Bands are used then four hubs may be accommodated on a single fibre. If additional hubs are required, then further Tx and Rx channels can be provided using the same wavelengths within the C- and L-bands transmitted on additional fibres. It will be appreciated that, although in the example presented here 16 Tx channels and 16 Rx channels are provided at each hub, there is a trade-off between the number of hubs supported, the number of Tx and Rx channels per hub, and the number of fibres required.

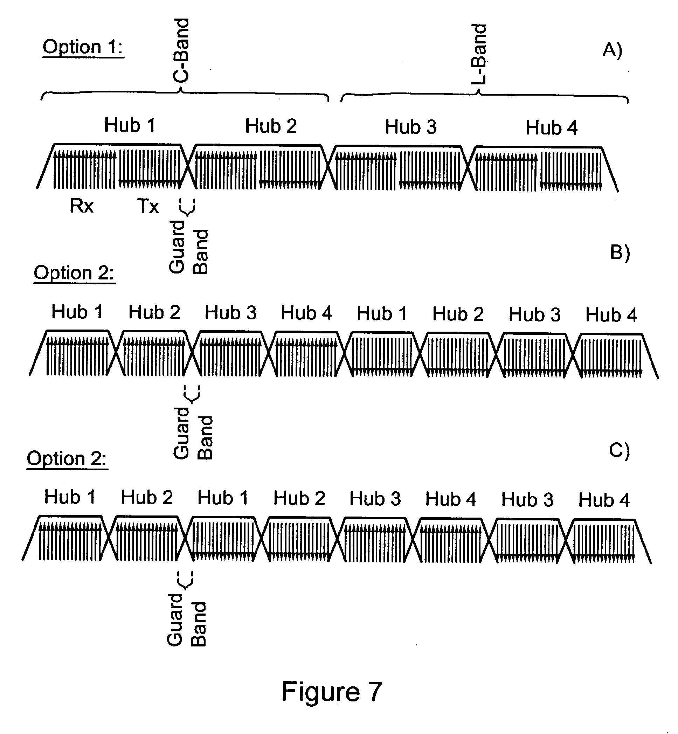

Figures 7A-C illustrates schematically three exemplary allocation schemes based on the use of C+L-Bands to support four hubs. In Figure 7A each hub is allocated a single continuous wavelength band 900*a-d* comprising both Tx wavelengths and Rx wavelengths. Within each CWDM Band 900*a-d* the shorter wavelengths are allocated to Rx channels 902*a-d* and the longer wavelengths are allocated to Tx channels 904*a-d.* The CWDM Bands 900*a-d* are separated by Guard Bands 906*a-c* which allow for the finite roll-off rate at the edges of the CWDM Band filters to minimise crosstalk between bands.

In Figure 7B each hub is allocated a wavelength band 908*a-d* within the C-Band for Rx wavelengths and a wavelength band 910*a-d* within the L-Band for Tx wavelengths. The CWDM Bands 908*a-d*, 910*a-d* are separated by Guard Bands 912*a-g* which allow for the finite roll-off rate at the edges of the CWDM Band filters to minimise crosstalk between bands.

In Figure 7C each hub is allocated two separate wavelength bands within either the C-Band or L-Band for Tx wavelengths and Rx wavelengths. Hub 1 and Hub 2 are allocated one band each 914*a*, 914*b* within the C-Band for Rx wavelengths, and another band 916*a*, 916*b* within the C-Band for Tx wavelengths. Hub 3 and Hub 4 are allocated one band each 918*a*, 918*b* within the L-Band for Rx wavelengths, and another band 920*a*, 920*b* within the L-Band for Tx wavelengths. The CWDM Bands 914*a*, 914*b*, 916*a*, 916*b*, 918*a*, 918*b*, 920*a*, 920*b* are separated by Guard Bands 922*a-g* which allow for the finite roll-off rate at the edges of the CWDM Band filters to minimise crosstalk between bands.

With any of these exemplary allocation schemes, the total number of channels may be increased by deploying additional hubs and a corresponding number of additional fibres.

### 2.7 Fibre Protection Switch 408 (Figure 2)

Returning now to Figure 2, a Fibre Protection Switch 408 may be optionally deployed between the CWDM Unit 406 and the DWDM MUX/DEMUX Unit 410. The function of the Fibre Protection Switch 408 is to switch channels from the primary fibre path 144 (Figure 1c) to the secondary fibre path 146 (Figure 1c) on the ring in the event of a fault.

The following subsections detail how protection switching may be implemented at the hubs 102, 104 (Figure 1c).

### 2.7.1 Transmission down either the primary or secondary path

Fibre protection switching occurs between the DWDM MUX/DEMUX Unit 410 and the CWDM Unit 406. This ensures that through traffic is not disrupted if the hub traffic is switched from the primary path 144 (Figure 1c) to the secondary path 146 (Figure 1c). In addition, the Fibre Protection Switch 408 is not a single point of failure in the ring.

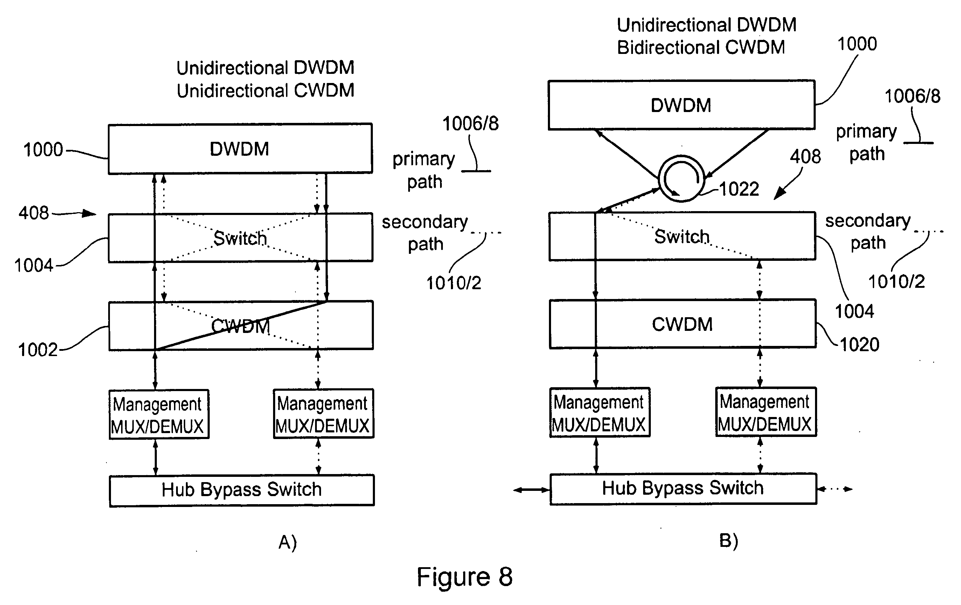

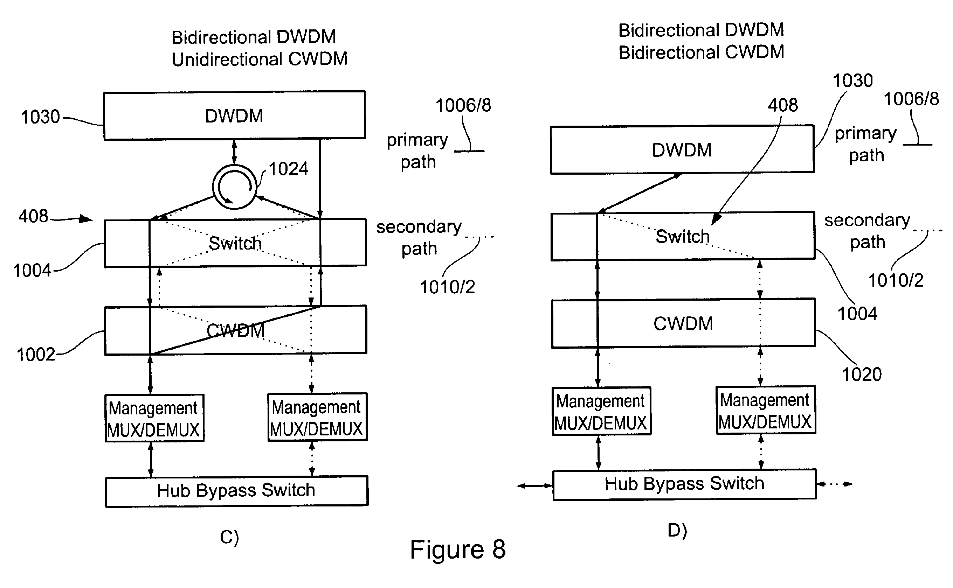

Figures 8A-D show how the Fibre Protection Switch 408 is implemented in preferred embodiments.

The actual configuration of the protection switch will depend on the output of the DWDM MUX/DEMUX Unit 410 (Figure 2) (unidirectional on two fibres as in Figure 4A or bi-directional on one fibre as in Figure 4B), and will depend on whether the CWDM Unit 406 (Figure 2) has the primary traffic Tx/Rx on one fibre and the secondary Tx/Rx on a different fibre (bi-directional CWDM), or has the primary and secondary Tx on a single fibre and the primary and secondary Rx on the other fibre (unidirectional CWDM).

Figure 8*A* shows the configuration of the Fibre Protection Switch 408 when the DWDM MUX/DEMUX Unit 410 (Figure 2) is a Unidirectional DWDM 1000, and the CWDM Unit is a Unidirectional CWDM 1002. In normal operation the Optical Crossbar Switch 1004 is in the "bar" state. The Primary Rx Path 1006 (indicated by solid lines with upward-directed arrows) passes from the upper left-hand port of the Unidirectional CWDM 1002 to the lower left-hand port of the Optical Crossbar Switch 1004, which, being in the "bar" state, passes this input to the upper left-hand port directed to the left-hand port of the Unidirectional DWDM 1000. The Primary Tx Path 1008 (indicated by solid lines with downward-directed arrows) passes from the right-hand port of the Unidirectional DWDM 1000 to the upper right-hand port of the Optical Crossbar Switch 1004, which, being in the "bar" state, passes this input to the lower right-hand port directed to the upper right-hand port of the Unidirectional CWDM 1002. In case of a failure of the primary path, the Optical Crossbar Switch 1004 directs traffic via the secondary path by switching into the "cross" state. The Secondary Rx Path 1010 (indicated by dotted lines with upward-directed arrows) passes from the upper right-hand port of the Unidirectional CWDM 1002 to the lower right-hand port of the Optical Crossbar Switch 1004, which, being in the "cross" state, passes this input across to the upper left-hand port directed to the left-hand port of the Unidirectional DWDM 1000. The Secondary Tx Path 1012 (indicated by dotted lines with downward-directed arrows) passes from the right-hand port of the Unidirectional DWDM 1000 to the upper right-hand port of the Optical Crossbar Switch 1004, which, being in the "cross" state, passes this input across to the lower left-hand port directed to the upper left-hand port of the Unidirectional CWDM 1002.

Figure 8*B* shows the configuration of the Fibre Protection Switch 408 when the DWDM MUX/DEMUX Unit 410 (Figure 2) is a Unidirectional DWDM 1000, and the CWDM Unit is a Bi-directional CWDM 1020. In normal operation the Optical Crossbar Switch 1004 is in the "bar" state. The Primary Rx Path 1006 passes from the upper left-hand port of the Bi-directional CWDM 1020 to the lower left-hand port of the Optical Crossbar Switch 1004, which, being in the "bar" state, passes this input to the upper left-hand port directed to a first port of an optical circulator 1022. The signal is passed via a second port of the circulator 1022 to the left-hand port of the Unidirectional DWDM 1000. The Primary Tx Path 1008 passes from the right-hand port of the Unidirectional DWDM 1000 to a third port of the optical circulator 1022. The signal is passed via the first port of the optical circulator 1022 to the upper left-hand port of the Optical Crossbar Switch 1004, which, being in the "bar" state, passes this input to the lower left-hand port directed to the upper left-hand port of the Bi-directional CWDM 1020. In case of a failure of the primary path, the Optical Crossbar Switch 1004 directs traffic via the secondary path by switching into the "cross" state. The Secondary Rx Path 1010 passes from the upper right-hand port of the Bi-directional CWDM 1020 to the lower right-hand port of the Optical Crossbar Switch 1004, which, being in the "cross" state, passes this input across to the upper left-hand port directed to the first port of the optical circulator 1022. The signal is passed via the second port of the circulator 1022 to the left-hand port of the Unidirectional DWDM 1000. The Secondary Tx Path 1012 passes from the right-hand port of the Unidirectional DWDM 1000 to the third port of the optical circulator 1022. The signal is passed via the first port of the optical circulator 1022 to the upper left-hand port of the Optical Crossbar Switch 1004, which, being in the "cross" state, passes this input across to the lower right-hand port directed to the upper right-hand port of the Unidirectional CWDM 1002.

Figure 8C shows the configuration of the Fibre Protection Switch 408 when the DWDM MUX/DEMUX Unit 410 (Figure 2) is a Bi-directional DWDM 1030, and the CWDM Unit is a Unidirectional CWDM 1002. In normal operation the Optical Crossbar Switch 1004 is in the "bar" state. The Primary Rx Path 1006 passes from the upper right-hand port of the Unidirectional CWDM 1002 to the lower right-hand port of the Optical Crossbar Switch 1004, which, being in the "bar" state, passes this input to the upper right-hand port directed to a first port of an optical circulator 1024. The signal is passed via a second port of the circulator 1024 to the single bi-directional port of the Bi-directional DWDM 1030. The Primary Tx Path 1008 passes from the single bi-directional port of the Bi-directional DWDM 1030 to the second port of the optical circulator 1024. The signal is passed via a third port of the optical circulator 1024 to the upper left-hand port of the Optical Crossbar Switch 1004, which, being in the "bar" state, passes this input to the lower left-hand port directed to the upper left-hand port of the Unidirectional CWDM 1002. In case of a failure of the primary path, the Optical Crossbar Switch 1004 directs traffic via the secondary path by switching into the "cross" state. The Secondary Rx Path 1010 passes from the upper left-hand port of the Unidirectional CWDM 1002 to the lower left-hand port of the Optical Crossbar Switch 1004, which, being in the "cross" state, passes this input across to the upper right-hand port directed to the first port of the optical circulator 1024. The signal is passed via the second port of the circulator 1024 to the single bi-directional port of the Bi-directional DWDM 1030. The Secondary Tx Path 1012 passes from the single bi-directional port of the Bi-directional DWDM 1030 to the second port of the optical circulator 1024. The signal is passed via the third port of the optical circulator 1024 to the upper left-hand port of the Optical Crossbar Switch 1004, which, being in the "cross" state, passes this input across to the lower right-hand port directed to the upper right-hand port of the Unidirectional CWDM 1002.

Figure 8D shows the configuration of the Fibre Protection Switch 408 when the DWDM MUX/DEMUX Unit 410 is a Bi-directional DWDM 1030, and the CWDM Unit is a Bi-directional CWDM 1020. In normal operation the Optical Crossbar Switch 1004 is in the "bar" state. The Primary Rx and Tx Paths 1006, 1008 pass from and to the upper left-hand port of the Bi-directional CWDM 1020 to and from the lower left-hand port of the Optical Crossbar Switch 1004 respectively. The Switch 1004, being in the "bar" state, passes these signals from and to the upper left-hand port directed from and to the single bi-directional port of the Bi-directional DWDM 1030. In case of a failure of the primary path, the Optical Crossbar Switch 1004 directs traffic via the secondary path by switching into the "cross" state. The secondary Rx and Tx Paths 1010, 1012 pass to and from the single bi-directional port of the Bi-directional DWDM 1030 from and to the upper left-hand port of the Optical Crossbar Switch 1004 respectively. The Switch 1004, being in the "cross" state, passes these signals from and to the lower right-hand port directed from and to the upper right-hand port of the Bi-directional CWDM 1020.

In the embodiments described above with reference to Figures 8*A-D* the Unidirectional CWDM 1002 and the Bi-directional CWDM 1020 are configured in use such that the Primary Rx and Tx Paths 1006, 1008 are directed from and to the left-hand Management MUX/DEMUX Unit 402 respectively, and the Secondary Rx and Tx Paths 1010, 1012 are directed from and to the right-hand Management MUX/DEMUX 402 respectively. In use, this arrangement provides for fully-redundant Primary and Secondary Paths 144, 146 in the network. Note that in each case bi-directional Primary and Secondary transmission is achieved using only a single fibre connection in each direction around the ring.

Advantageously, the Optical Crossbar Switch 1004 may comprise an electronically-controlled optoelectronic crossbar switch.

### 2.7.2 Dual homing

Dual homing describes the configuration where the same data is continuously transmitted down both the Primary and the Secondary Paths 144, 146 (Figure 1c). Both signals are received and the decision as to which data stream to use is made by the receiving equipment. On a fibre break it may be necessary to prevent hazardous levels of optical power from being emitted at the break, e.g. by deactivating transmitters or optical amplifiers and/or by deploying suitable optical switching means. Advantageously, the use of dual-homing may enable fully redundant Primary and Secondary Paths 144, 146 (Figure 1c) to be provided without the deployment of a Fibre Protection Switch 408.

### 2.7.3 Dual transmission

Dual transmission describes the configuration where the same data is continuously transmitted down both the Primary and the Secondary paths 144, 146 (Figure 1c). Only one signal is received, and the decision as to which data stream to use is made by optically switching between the two paths. On a fibre break it may be necessary to prevent hazardous levels of optical power from being emitted at the break, e.g. by deactivating transmitters or optical amplifiers and/or by deploying suitable optical switching means. Advantageously, the use of dual-transmission may enable fully redundant Primary and Secondary Paths 144, 146 (Figure 1c) to be provided without the deployment of a Fibre Protection Switch 408 (Figure 2), however an additional optical switching means is required at the receiving hub.

### 2.7.4 Pre-emptible traffic on Secondary Path 146 (Figure 1c)

In a system which supports multiple service classes, there may be provision for low-priority pre-emptible traffic which is offered no quality of service guarantees. Such traffic need not be protected or restored in case of a failure of equipment or plant. It is therefore possible to transmit pre-emptible traffic on the Secondary Path 146 (Figure 1c) in normal operation. In case of an equipment failure or fibre cut which results in a failure of the Primary Path 144 (Figure 1c), the low-priority traffic is dropped, and the priority traffic is switched to the Secondary Path 146 (Figure 1c). To enable this option, at least the DWDM MUX/DEMUX 410 (Figure 2), Trunk Interface Cards 412 (Figure 2), and Channel Switch 414 (Figure 2) must be fully-duplicated. Advantageously, this technique allows the capacity of the Secondary Path 146 to be fully-utilised under normal operating conditions, and the duplication of components allows the protection of equipment as well as transmission paths.

### 2.8 Management Unit 402, 404 (Figure 2)

Management information is transmitted between network elements using a dedicated optical channel at a nominal wavelength of 1510 nm. The Management MUX/DEMUX 402 (Figure 2) multiplexes and demultiplexes the management channels with the DWDM trunk channels via optical multiplexing and demultiplexing means. The Management Channel Tx/Rx 404 (Figure 2) transmits and receives the management data.

### 2.9 Hub Bypass Switch 400 (Figure 2)

The Hub Bypass Switch 400 (Figure 2) physically connects the ring to the hub and is also used to switch the hub out of the ring while still passing express traffic.

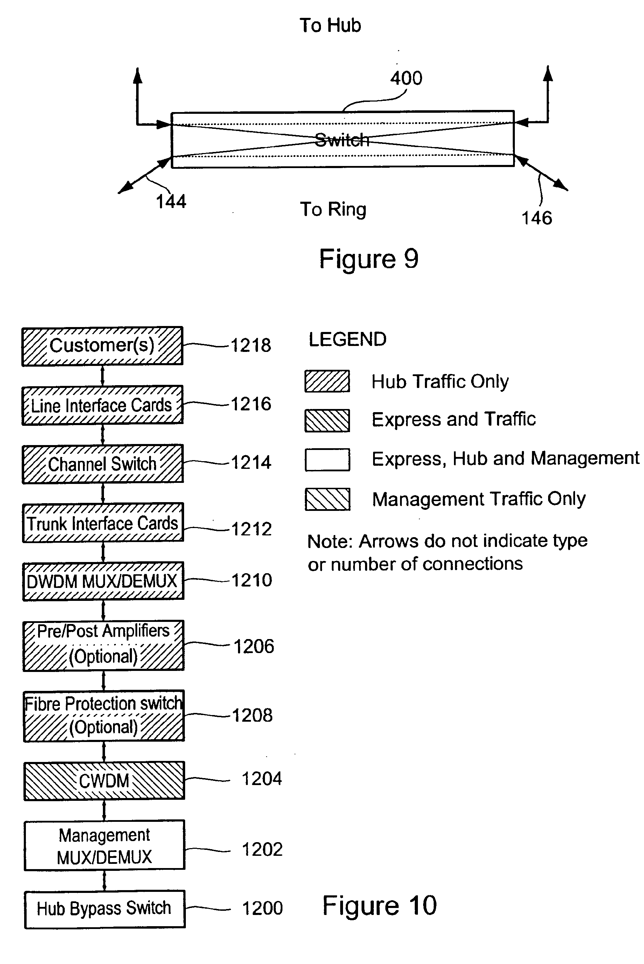

A preferred embodiment of the Hub Bypass Switch 400 (Figure 2) comprising an optical crossbar switch is shown in Figure 9. In normal operation, the switch is in the "cross" state as shown, and the bi-directional Primary Path 146 (Figure 1c) is switched between the ring at the lower left port and the hub at the upper right port. Simultaneously, the bi-directional Secondary Path 144 (Figure 1c) is switched between the ring at the lower right port, and the hub at the upper left port. If the hub is to be removed from the ring, the Hub Bypass Switch 400 is switched to the "bar" state, so that all traffic in the ring bypasses the hub.

Advantageously, the Hub Bypass Switch 400 may be a mechanical fibre switch. Advantageously, the Hub Bypass Switch 400 may be manually operated with interlocking keys.

### 3 Type 2 Embodiment 162 (Figure 1d) - Medium Size Ring with Hub Amplifiers

Returning to Figure 1d, the Type 2 embodiment 162 is a ring network in which one or more paths exist for which the optical power budget is exceeded by the losses incurred in transmission through fibre and traversal of optical components. Typically, a Type 2 ring will have a larger diameter than a Type 1 ring, or will incorporate a greater number of metro hubs, or both.

In the Type 2 embodiment 162, the exhaustion of the optical power budget is overcome by the addition of optical amplifiers 168 at the transmitters, at the receivers, or both. An optical amplifier placed after a transmitter to boost the launched power is referred to as a post-amplifier, whereas an optical amplifier placed in front of a receiver to improve sensitivity is referred to as a pre-amplifier. Advantageously, an optical amplifier 168 used as a post-amplifier will have a high output power, whereas an optical amplifier 168 used as a pre-amplifier will have a low noise figure.

The key characteristics of the Type 2 embodiment 162 are:
- the maximum transmission distances and number of metro nodes which may be supported are increased compared to the Type 1 embodiment 160;
- transmission distances are short compared with the Type 3 and 4 embodiments 164, 166. Chromatic dispersion may be a limiting factor on some paths, depending upon the bit-rate, fibre type and components used. Where chromatic dispersion is not a limiting factor, advantageously, some cheaper components, such as short-haul directly modulated lasers, may be employed. Where chromatic dispersion may be a limiting factor, advantageously, high performance components, such as long-haul lasers, may be employed;
- in the event of a fibre-cut, post-amplifiers must switch off to prevent potentially hazardous levels of optical radiation from being emitted from the cut fibre;
- protection switching may be effected by using an optoelectronic switch or, advantageously, by using dual homing and the gain of the hub pre-amplifiers;
- optical post- and pre-amplifiers 168 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following the hub design in the Type 2 embodiment 162, which is a ring network in which one or more paths exist for which the optical power budget is exceeded by the losses incurred in transmission through fibre and traversal of optical components, will be described in more detail. The Type 2 network embodiment 162 comprises hubs that comprise optical pre-amplifiers, optical post-amplifiers, or both optical pre-amplifiers and optical post-amplifiers 168. Advantageously, the optical pre- and/or post-amplifiers 168 may be additionally employed to effect protection switching in place of the Fibre Protection Switch 408.

### 3.1 Overview of Hub Structure in the Type 2 Embodiment

Figure 10 is a block diagram that shows schematically the major units that may comprise a hub 102, 104 (Figure 1d) in the Type 2 embodiment. The functions of the LIC 1216, Channel Switch 1214, TIC 1212, DWDM MUX/DEMUX Unit 1210, CWDM Unit 1204, Management Unit 1202 and Hub Bypass Switch 1200 are the same as those that comprise the Type 1 embodiment. The Fibre Protection Switch 1206 is optional. Pre and post-amplifiers 1208 are required in some or all of the hubs comprising the Type 2 embodiment.

### 3.2 Hub Amplification and Fibre Protection

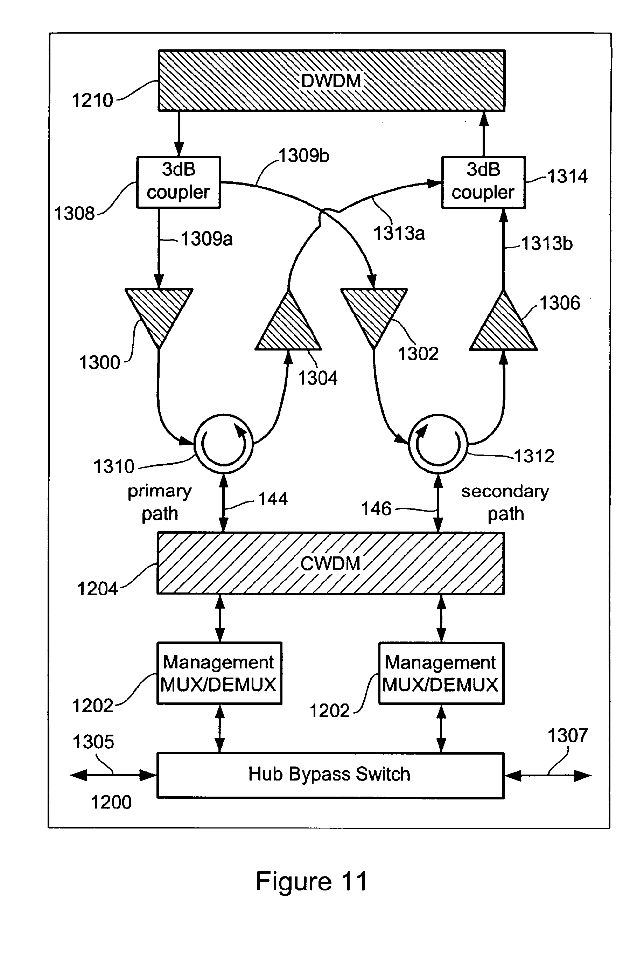

Figure 11 represents a preferred embodiment of a hub configured with optical post-amplifiers 1300, 1302 and pre-amplifiers 1304 1306. Optical signals transmitted via the DWDM MUX/DEMUX Unit 1210 are passed to a first port of the 3 dB coupler 1308. Half of the power is output from a second port of the 3 dB coupler 1308 to a first output path 1309*a*, and half of the power is output from a third port of the 3 dB coupler 1308 to a second output path 1309*b*. Signals on the first path 1309*a* are amplified by the optical post-amplifier 1300, and passed to a first port of an optical circulator 1310. These signals, comprising the Primary Tx Path, are output from a second port of the optical circulator 1310 to the upper left-hand port of the Bi-directional CWDM 1204, from which they are sent onto the primary path 144 of the network 140 via a Management MUX/DEMUX Unit 1202 and the Hub Bypass Switch 1200. Signals on the second path 1309*b* output from the 3 dB coupler 1308 are amplified by the optical post-amplifier 1302, and passed to a first port of an optical circulator 1312. These signals, comprising the Secondary Tx Path, are output from a second port of the optical circulator 1312 to the upper right-hand port of the Bi-directional CWDM 1204, from which they are sent onto the secondary path 146 of the network 140 via a Management MUX/DEMUX Unit 1202 and the Hub Bypass Switch 1200.

Optical signals received from the primary path 144 via the Hub Bypass Switch 1200 and the Management MUX/DEMUX Unit 1202 are output from the upper left-hand port of the Bi-directional CWDM 1204 to the second port of the optical circulator 1310. These signals are output from a third port of the optical circulator 1310 to the optical pre-amplifier 1304. The signals are passed via a first path 1313*a* to a first port of the 3 dB coupler 1314, and output from a second port of the 3 dB coupler 1314 to the WDM MUX/DEMUX Unit 1210. Optical signals received from the secondary path 146 via the Hub Bypass Switch 1200 and the Management MUX/DEMUX Unit 1202 are output from the upper right-hand port of the Bi-directional CWDM 1204 to the second port of the optical circulator 1312. These signals are output from a third port of the optical circulator 1312 to the optical pre-amplifier 1306. The signals are passed via a second path 1313*b* to a third port of the 3 dB coupler 1314, and output from the second port of the 3 dB coupler 1314 to the WDM MUX/DEMUX Unit 1210.

Advantageously, both optical post-amplifiers 1300, 1302 may be active and amplifying signals from both path 1309*a*, 1309*b* for simultaneous transmission along the primary path 144 and the secondary path 146 of the network 140 in either a dual homing or a dual transmission configuration. Advantageously, in the event of a fibre cut on either the primary path 144 or the secondary path 146, the corresponding post-amplifier 1300, 1302 may be deactivated to prevent the emission of hazardous levels of optical radiation at the location of the fibre cut.

Advantageously, only one pre-amplifier 1304 or 1306 is active so that only one of the two paths 1313*a*, 1313*b* is active. The pre-amplifier 1304 or 1306 which is to be activated may be determined either as the pre-amplifier receiving the best quality signal in the case of a dual homing configuration, or by fixed-alternate routing in the case of a dual transmission configuration.

Advantageously, by deploying the optical post-amplifiers 1300, 1302 and pre-amplifiers 1304, 1306, in the manner described, protection switching and optical amplification may be simultaneously effected without the need for a Fibre Protection Switch 1206.

A suitable method is required to effect protection switching using the optical amplifiers 1300, 1302, 1304, 1306. In a preferred embodiment, the method comprises the following exemplary steps:
- assuming that initially the active path is the primary path 144, a failure of the primary path 144 (e.g. a fibre cut) is detected by the occurrence of a "no signal" condition at the pre-amplifier 1304;
- the pre-amplifier 1304 at which the "no signal" condition is detected is shut down, and the pre-amplifier 1306, which amplifies the signal received from the secondary path 146, is activated;
- the failure of the primary path 144 is communicated to the corresponding transmitting hub via the management channels provided by the Management MUX/DEMUX Unit 1202;
- the post-amplifier 1300 at the transmitting hub corresponding to the failed primary path 144 is deactivated, to prevent the emission of hazardous levels of optical radiation at the location of the fibre cut.

Alternatively, if it is impractical to use the optical amplifiers for protection switching due e.g. to their having insufficiently fast switching speeds, the same techniques described previously with reference to Figure 8 may be used to provide protection switching.

Advantageously, a method may also be provided to deactivate the transmitter in the case of a failure of an inactive path, e.g. the secondary path 146, in order to prevent the emission of hazardous levels of optical radiation at the location of a fibre cut in the inactive path. In a preferred embodiment, the method comprises the following exemplary steps:
- assuming that initially the active path is the primary path 144, a failure of the inactive secondary path 146 (e.g. a fibre cut) is detected by the occurrence of a "no signal" condition at the pre-amplifier 1306;
- the failure of the secondary path 146 is communicated to the corresponding transmitting hub via the management channels provided by the Management MUX/DEMUX Unit 1202;
- the post-amplifier 1302 at the transmitting hub corresponding to the failed secondary path 146 is deactivated, to prevent the emission of hazardous levels of optical radiation at the location of the fibre cut.

Note that signals propagate bi-directionally on each of the trunk fibres 1305, 1307, and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

### 4 Type 3 Embodiment 164 (Figure 1d) - Large Ring with Closely Spaced Metro Hubs

Returning to Figure 1d, the Type 3 embodiment 164 is a ring network in which a cluster of metro hubs 102 exists, consisting of two or more metro hubs located physically close to each other but physically distant from the core hub 104. The long transmission distance from the metro hubs 102 to the core hub 104 requires optical amplification by one or more amplifiers 170 located along the transmission fibre. An optical amplifier placed in a transmission span to restore the signal level is referred to as a line-amplifier. No line-amplification is required over the short transmission links between metro hubs 102.

At each line-amplifier 170 in a Type 3 embodiment 164, all signals sent from the metro hub 102 cluster to the core hub 104 will propagate in one direction (i.e. either clockwise or counter-clockwise), whereas all signals sent from the core hub to the metro hub will propagate in the opposite direction. This simplifies the filtering requirements for the line-amplifiers 170 and allows for a wider choice of CWDM. DWDM and interleaving options than in the Type 4 embodiment 166.

The key characteristics of the Type 3 embodiment 164 are:
- the distances from the metro hub 102 cluster to the core hub 104 may be increased by use of one or more optical line-amplifiers 170 deployed in the fibre spans linking the metro hub cluster to the core hub;
- the maximum unamplified fibre span, and the maximum distance between line-amplifiers 170 may be increased by using pre- and/or post-amplifiers 168, in addition to the line-amplification;
- the maximum distances between metro hubs 102 in the cluster, and the maximum number of metro hubs 102 in the cluster, are limited by the optical power budget. Advantageously, components and fibre with low attenuation should be employed;
- transmission distances between the metro hub 102 cluster and the core hub 104 may be sufficiently long that chromatic dispersion is a limiting factor. Advantageously, long-haul lasers may be employed to ensure optimum performance;
- advantageously, bi-directional line-amplifiers 170 may be employed which have been designed to prevent the onset of lasing in the presence of external reflections, signal failures, fibre-cuts and so on;
- advantageously, the line-amplifiers 170 may be fully-managed network elements;
- optical post-, pre- and line-amplifiers 168. 170 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following the hub and amplifier designs in the Type 3 embodiment 164, which is a ring network in which there exists a cluster of metro hubs that are physically close to each other but physically distant from the core hub, will be described in more detail. One or more optical line amplifiers 170 are required to transmit signals from the clustered metro hubs over the long transmission distances to the core hub.

Each of the hubs may also comprise post- and/or pre-amplifiers as for the Type 2 embodiment.

Due to the longer transmission distances in the Type 3 embodiment the optical signal to noise ratio (OSNR) of signals potentially becomes the limiting factor to ring size (or more specifically the core hub to metro hub distance). Dispersion may also be a factor over longer transmission distances, in which case long-haul laser sources may be advantageously employed to enable unrepeated transmission between the metro hubs and the core hub.

### 4.1 Overview of Hub Structure in the Type 3 Embodiment

The hub structure in the Type 3 embodiment is the same as that of the Type 2 embodiment as shown in Figure 10. Pre- and post-amplifiers 1208 are optional in the Type 3 embodiment, and may be employed where the line amplifiers 170 (Figure 1d) are insufficient to enable transmission over the long spans between the core hub and the metro hubs.

### 4.1.1 Line amplifiers 170 (Figure 1d)

In order to allow for fully-protected transmission on a single optical fibre in the case of e.g. a fibre break, the optical ring network 140 (Figure 1d) must support bi-directional transmission, i.e. transmission in both the clockwise and counter-clockwise directions from the metro hubs 102 (Figure 1d) to the core hub 104 (Figure 1d) and vice-versa. In the Type 1 and Type 2 embodiments. the ring comprises only optical fibre which has no preferred propagation direction and thus is inherently bi-directional. However, optical amplifiers are not in general bi-directional devices, and therefore the line amplifiers must be designed specifically to support bi-directional propagation.

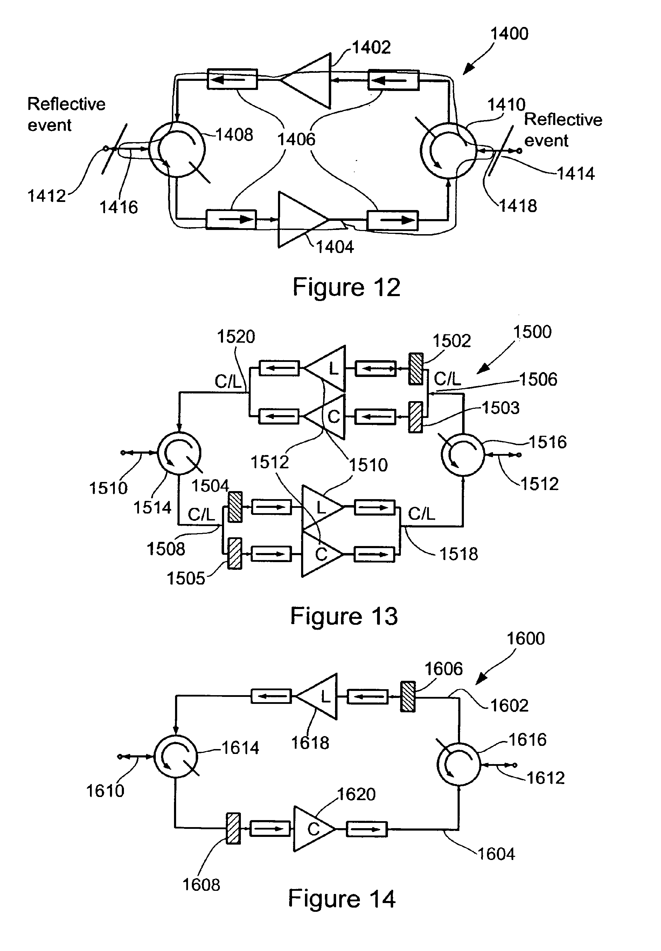

Figure 12 shows schematically a simple bi-directional amplifier design 1400. The bi-directional amplifier 1400 comprises two unidirectional amplifiers 1402, 1404. Isolators 1406 are used to ensure unidirectional propagation of light within each amplifier. Signals entering the bi-directional amplifier from the left-hand fibre 1416 are passed by the circulator 1408 to the lower amplifier 1404, where they are amplified and then passed by the circulator 1410 to the right-hand fibre 1418. Signals entering the bi-directional amplifier from the right-hand fibre 1418 are passed by the circulator 1410 to the upper amplifier 1402, where they are amplified and then passed by the circulator 1408 to the left hand fibre.

A potential problem arises in a bi-directional amplifier with the structure shown in Figure 12 if a network fault condition or other fibre imperfection exists resulting in points of reflection 1412, 1414 on both sides of the bi-directional amplifier 1400. In this case, the reflected light is able to circulate within the bi-directional amplifier 1400. If the double pass gain experienced is higher than the loss from the dual reflective events 1412, 1414 parasitic lasing will occur, degrading the performance of the bi-directional amplifier 1400, and hence degrading the network performance.

Advantageously the chosen CWDM Band Allocation scheme may be utilised in the design of a bi-directional amplifier in which parasitic lasing cannot occur. Figure 13 shows an exemplary bi-directional amplifier 1500 that is designed to amplify selected bands in each direction, in both the C-band and the L-band. Since most commercially available optical amplifiers amplify only within one band, the C+L-band bi-directional amplifier 1500 comprises L-band amplifiers 1510 and C-band amplifiers 1512 in each direction. The bi-directional amplifier 1500 may be used with the CWDM Band Allocations schemes shown in Figures 7A and 7C.

Signals entering the bi-directional amplifier 1500 from the left-hand fibre 1510 are passed by the circulator 1514 to the lower path in which they enter the C/L-Band splitter 1508. All signals within the L-band are passed to the L-band filter 1504, while all signals within the C-band are passed to the C-band filter 1505. The pass bands of the L-band and C-band filters 1504, 1505 are determined by the CWDM Band Allocation scheme used. If the scheme shown in Figure 7A is used, the L-band filter 1504 passes e.g. wavelength bands 902*c* and 902*d* while the C-band filter 1505 passes e.g. wavelength bands 902*a* and 902*b*. If the scheme shown in Figure 7C is used, the L-band filter 1504 passes e.g. wavelength bands 918*a* and 918*b* while the C-band filter 1505 passes e.g. wavelength bands 914*a* and 914*b*. The signals are amplified in the L and C-band amplifiers 1510, 1512, recombined in the C/L band coupler 1518, and then output via the circulator 1516 to the right-hand fibre 1512.

Signals entering the bi-directional amplifier 1500 from the right-hand fibre 1512 are passed by the circulator 1516 to the upper path in which they enter the C/L-Band splitter 1506. All signals within the L-band are passed to the L-band filter 1502, while all signals within the C-band are passed to the C-band filter 1503. The pass bands of the L-band and C-band filters 1502, 1503 are determined by the CWDM Band Allocation scheme used. If the scheme shown in Figure 7A is used, the L-band filter 1502 passes e.g. wavelength bands 904*c* and 904*d* while the C-band filter 1503 passes e.g. wavelength bands 904*a* and 904*b*. If the scheme shown in Figure 7C is used, the L-band filter 1502 passes e.g. wavelength bands 920*a* and 920*b* while the C-band filter 1503 passes e.g. wavelength bands 916*a* and 916*b*. The signals are amplified in the L and C-band amplifiers 1510, 1512, recombined in the C/L band coupler 1520, and then output via the circulator 1514 to the left-hand fibre 1510.

Advantageously, in this arrangement the L-band filters 1502, 1504 and the C-band filters 1502, 1503 pass different bands in the two directions so that reflections on either side of the bi-directional amplifier 1500 do not result circulation of light, and hence parasitic lasing is avoided.

Figure 14 shows an exemplary bi-directional amplifier 1600 that is designed to amplify the C-band in one direction, e.g. left to right, and the L-band in the other direction, e.g. right to left. The bi-directional amplifier 1600 may be used with the CWDM Band Allocation scheme shown in Figure 9B.

Signals entering the bi-directional amplifier 1600 from the left-hand fibre 1610 are passed by the circulator 1614 to the lower path 1604 in which they are filtered by a C-band filter 1608 and amplified by a C-band amplifier 1620. They are then passed via the circulator 1616 to the right-hand fibre 1612.

Signals entering the bi-directional amplifier 1600 from the right-hand fibre 1612 are passed by the circulator 1616 to the upper path 1602 in which they are filtered by an L-band filter 1606 and amplified by a L-band amplifier 1618. They are then passed via the circulator 1614 to the right-hand fibre 1610.

Advantageously, the bi-directional amplifier 1600 has a simpler structure than the alternative bi-directional amplifier design 1500, and requires fewer components. However, the corresponding CWDM Band Allocation, shown in Figure 9B, requires a larger number of guard bands 912*a-g*, and more complex DWDM filtering within the hubs.

It will be appreciated that other embodiments of the bi-directional amplifiers 1500, 1600 are possible, including those derived by a simple re-ordering of the optical components, without departing from the scope of the present invention.

### 4.1.2 CWDM Unit 1204 (Figure 10)

The physical design of the CWDM Unit 1204 (Figure 10) is the same for the Type 3 embodiment 164 (Figure 1d) as for the Type 2 embodiment 162 (Figure 1d). However, the power of each signal within each CWDM Band must be similar when entering an optical amplifier. If one or more bands, or one or more signals within a band, have higher power than the others then they may saturate the gain of the amplifier resulting in a smaller gain being experienced by the weaker bands or signals. This may result in the weaker signals experiencing reduced OSNR, and hence degraded performance.

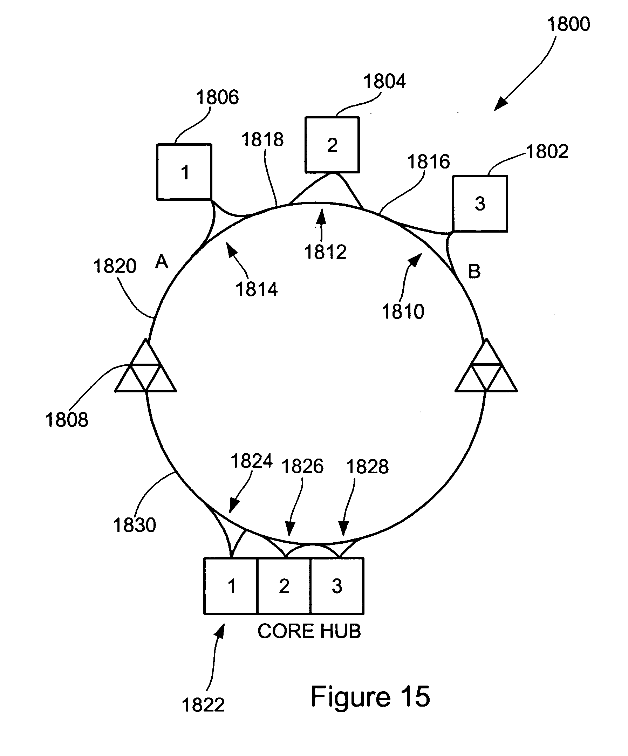

Figure 15 illustrates this problem in an exemplary Type 3 embodiment 1800. Considering channels transmitted from the three metro hubs 1802, 1804, 1806 to the core hub 1822 in a counter-clockwise direction, it is apparent that the signals sent from the metro hub 1802 must travel further than signals sent from the metro hubs 1804, 1806. After being added to the ring via the CWDM Unit 1810, channels from the metro hub 1802 suffer additional attenuation in the three fibre spans 1816, 1818, 1820, and the CWDM Units 1812, 1814 before arriving at the line amplifier 1808. Channels from the metro hub 1804 suffer attenuation in only two fibre spans 1818, 1820 and one CWDM Unit 1814 before arriving at the line amplifier 1808. Channels from the metro hub 1806 suffer attenuation in only the fibre span 1820 before arriving at the line amplifier 1808. Thus the power transmitted from the metro hub 1802 must be higher than the power transmitted from the metro hub 1804, which must in turn be higher than the power transmitted from the metro hub 1806, so that the power of all signals in the corresponding CWDM bands is equalised at the input of the line amplifier 1808.

A similar problem arises in transmission from the core hub 1822 to the metro hubs 1802, 1804, 1806. Considering transmission in the clockwise direction signals sent via the core hub CWDM Units 1824, 1826, 1828 should have the same power level at the input to the fibre span 1830, in order to arrive at the input of the line amplifier 1808 with equalised power levels. However, in this case the signals reaching the metro hub 1802 will be weaker than those reaching the metro hub 1804, which will be weaker in turn than those reaching the metro hub 1806. Thus the metro hubs 1802, 1804, 1806 must be design to tolerate the resulting range of received signal powers. Alternatively, signals may be transmitted from the core hub 1822 with different power levels so that they are received at the metro hubs 1802, 1804, 1806 with similar power levels. In this case, the power at the input to the line amplifier 1808 will not be equalised, and there will accordingly be a range of OSNR's received at the metro hubs 1802, 1804, 1806, with the metro hub 1802 receiving the lowest-quality signal, and the metro hub 1806 receiving the highest-quality signal. Accordingly, the network must be designed to be tolerant of the resulting range of received OSNR.

If the power and OSNR requirements for transmission from the metro hubs 1802, 1804, 1806 to core hub 1822, and from the core hub 1822 to metro hubs 1802, 1804, 1806 cannot be simultaneously satisfied then the network cannot be designed in accordance with the principles of the Type 3 embodiment, and must instead be designed in accordance with the principles of the Type 4 embodiment.

Note that signals propagate bi-directionally on each of the trunk fibres e.g. 1820, 1830 and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

### 5 Type 4 Embodiment 166 (Figure 1d) - Large Ring/Fully Flexible Solution

Returning to Figure 1d, the Type 4 embodiment 166 is a ring network in which the spacing between any metro hub 102 and the core hub 104, and the spacing between any two adjacent metro hubs 102, may be large. Optical post- and/or pre-amplifiers 168 may be required at any hub node 102. 104. One or more optical line-amplifiers 170 may be required within any fibre span.

The key characteristics of the Type 4 embodiment 166 are:
- the distances between any pair of hubs 102, 104 may be increased by use of one or more optical line-amplifiers 170 deployed in one or more of the fibre spans comprising the ring network;
- the maximum unamplified fibre span, and the maximum distance between line-amplifiers 170 may be increased by using pre- and/or post-amplifiers 168, in addition to the line-amplification;
- transmission distances between the metro hubs 102 and the core hub 104 may be sufficiently long that chromatic dispersion is a limiting factor. Advantageously, long-haul lasers may be employed to ensure optimum performance;
- advantageously, bi-directional line-amplifiers 170 may be employed which have been designed to prevent the onset of lasing in the presence of external reflections, signal failures, fibre-cuts and so on;
- advantageously, the line-amplifiers 170 may be fully-managed network elements;
- optical post-, pre- and line-amplifiers 168, 170 introduce amplified spontaneous emission (ASE) noise, which degrades the optical signal-to-noise ratio (OSNR). The impact of OSNR degradation, as well as power budget and the impact of chromatic dispersion, must be considered in the design and implementation of the network.

In the following, modifications to the hub and line amplifier designs that are advantageous in the implementation of the Type 4 embodiment 166 are described in more detail. The Type 4 embodiment 166 is a ring network in which the spacing between any metro hub 102 and the core hub 104, and the spacing between any two adjacent metro hubs 102, may be large. The Type 4 embodiment 166 comprises optical pre, post and line amplifiers as required to provide the flexibility to implement a network limited only by the effects of dispersion, OSNR degradation and other transmission impairments, regardless of the distances separating the core and hub nodes. In particular, the Type 4 embodiment 166 enables networks of up to at least 500 km total length to be implemented, however it will be appreciated that in many applications the Type 4 embodiment 166 may comprise a ring network of greater total length.

Many of the design principles of the Type 4 embodiment are similar to those of the Type 3 embodiment. In general, the line amplifier design 1500 shown in Figure 13 is required in the Type 4 embodiment, since the propagation direction of different CWDM bands is generally different between adjacent pairs of metro hubs. If the CWDM Band Allocation scheme shown in Figure 7B is used, the simplified line amplifier structure 1600 shown in Figure 14 may be used only for line amplifiers between the core hub and adjacent metro hubs. In many applications these line amplifiers may not be required, or may comprise only a small proportion of the total number of optical amplifiers used in the network, and thus the use of the CWDM Band Allocation scheme shown in Figure 7B is less attractive for the Type 4 embodiment.

Advantageously, since all channels may require periodic amplification the hub post-amplification function may be combined with the line amplification function in a configuration hereafter known as an "inline hub amplifier". The use of inline hub amplifiers may allow the network operator to install all equipment at a single site, i.e. additional sites may not be required for line amplifiers. The use of inline hub amplifiers may also simplify the management of a network fault, such as a fibre cut, and may allow the total number of amplifiers in the network to be reduced.

### 5.1 Inline Hub Amplifier Configuration 1904

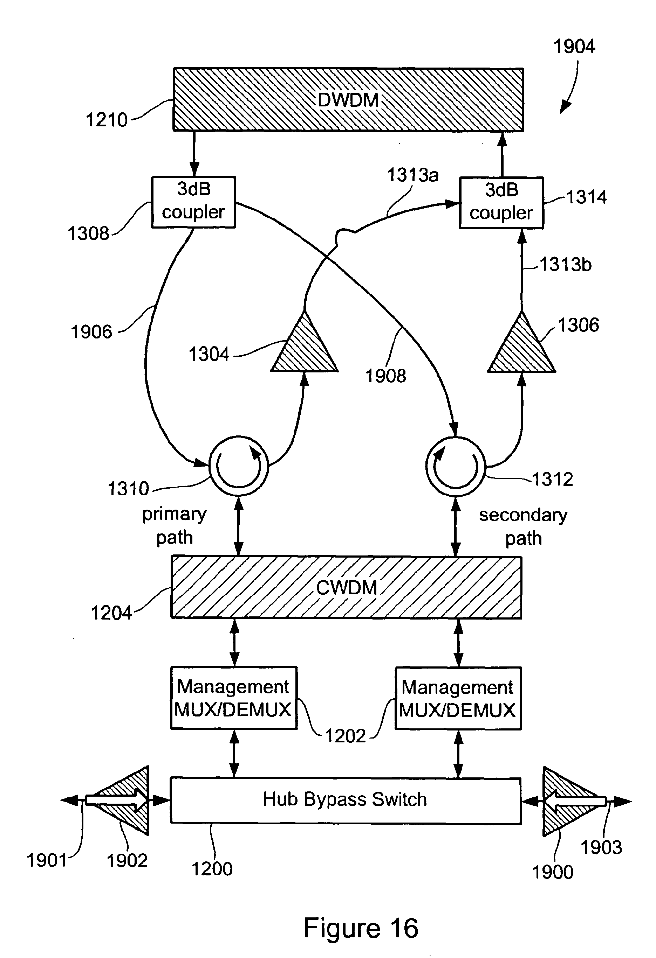

Figure 16 shows the Inline Hub Amplifier Configuration 1904 at a metro hub 102 (Figure 1d). The overall hub configuration is similar to that of the Type 2 Embodiment shown in Figures 10 and 11. However, the hub post amplifiers 1300, 1302 have been removed and replaced with fibre connections 1906, 1908 between the 3-dB Coupler 1308 and the circulators 1310, 1312. Bi-directional uni-amplification amplifiers 1900, 1902 have been added on either side of the Hub Bypass Switch 1200. Advantageously the bi-directional uni-amplification amplifiers 1900, 1902 act as post amplifiers for the outgoing hub traffic, and as line amplifiers for the express traffic that bypasses the hub. Note that the bi-directional uni-amplification amplifiers 1900, 1902 function as line amplifiers for express traffic even if the Hub Bypass Switch 1200 is closed, isolating the hub from the network.

Note that signals propagate bi-directionally on each of the trunk fibres 1901, 1903, and that one direction around the ring corresponds to the primary path, and the other to the secondary path to provide protection. Therefore, in a minimal configuration, only one transmission fibre is required between each pair of adjacent hubs. The network is therefore able to provide bi-directional transmission and protection on a ring comprising single fibre connections.

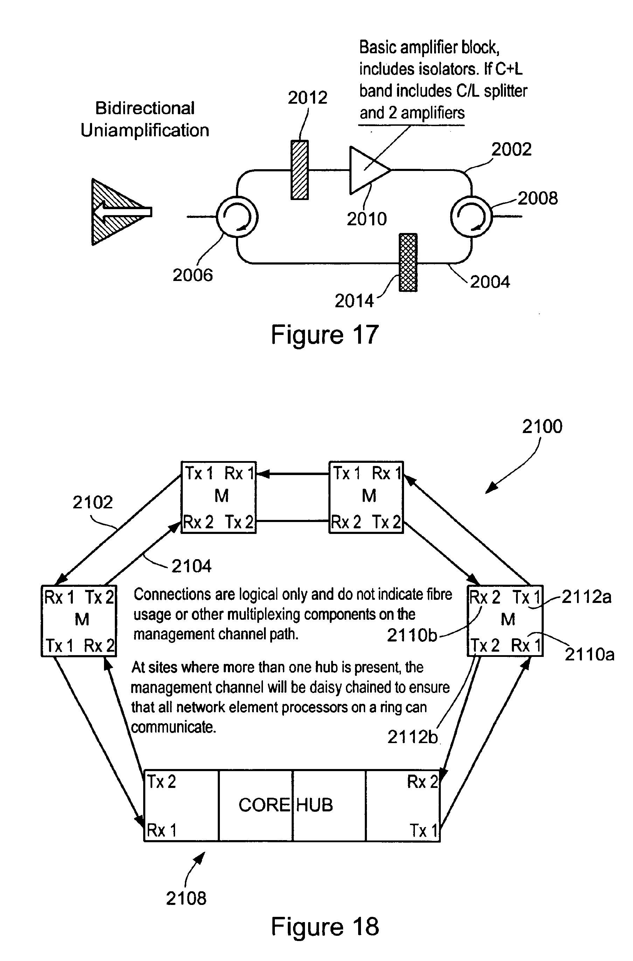

The structure 2000 of the bi-directional uni-amplification amplifiers 1900, 1902 is shown in Figure 17. In the structure 2000, there are provided 2 optical paths 2002, 2004 between different ports of 2 circulators 2006, 2008. Only one of the optical paths, 2002, comprises an amplifier 2010, while both optical paths 2002, 2004 comprise filters 2012, 2014 to prevent parasitic lasing of the amplifier structure 2000. The amplifier 2010 may comprise input and output optical isolators. The amplifier 2010 may further comprise a single C-band amplifier, a single L-band amplifier or dual C+L band amplifiers, C/L band splitter and combiner and associated filters, similar to the bi-directional amplifier structure 1500.

The benefits of the Inline Hub Amplifier Configuration 1904 may be summarised as follows:
- Advantageously, it may be possible to co-locate some or all inline amplifiers at hubs, obviating the need to install line amplifiers in the field.
- Advantageously, the management of a network failure such as, e.g. a fibre cut, is simplified- the only action required at the hubs is to turn off the in-line hub amplifiers adjacent to the cut.
- Advantageously, the bi-directional uni-amplification amplifiers 1900, 1902 replace the post-amplifiers 1300, 1302 while also performing the function of line amplification for express traffic. Hence the number of amplifiers in the network may be reduced.

### 6 Optical Management Channel

Advantageously, all embodiments of the optical ring network may comprise a Management Network which overlays the physical and logical topology of the data communication network. The management network enables all Managed Network Elements within the network to be monitored and/or controlled from a Management Terminal. A Managed Network Element may comprise e.g. a metro hub, a core hub or a line amplifier. The Management Terminal may be connected directly to a Managed Network Element, integrated within a Managed Network Element, or located remotely from the network a connected e.g. via a dedicated management network connection or via a publicly accessible network such as the Internet.

The logical connectivity of the Management Network 2100 is shown in Figure 18. The Management Network 2100 comprises two logical channels counter-propagating within the network. Advantageously, the use of two counter-propagating channels ensures that communication of management information between any pair of network elements is not interrupted in the case of any single failure such as e.g. a fibre cut. Each counter-propagating channel consists of a set of point-to-point links, e.g. 2102, 2104, connecting adjacent Managed Network Elements, e.g. 2106. Thus each Managed Network Element 2106 comprises two management receivers 2110*a*, 2110*b* and two management transmitters 2112*a*, 2112*b*. Some terminal equipment, e.g. a Core Hub 2108, may contain multiple Managed Network Elements. in which case the connectivity between these elements is effected internally, and the terminal equipment still has only two sets of management transmitters and receivers.

Within each Managed Network Element, the management signals are multiplexed and demultiplexed with the data signals on each fibre by the Management MUX/DEMUX Units 402 (Figure 2), 1202 (Figure 10).

Advantageously, since the management channel connections e.g. 2102, 2104, are established between adjacent Managed Network Elements, they are fully regenerated at each Managed Network Element, and do not require optical amplification.

Advantageously, the management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

Advantageously, in order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

Advantageously, the management channel may comprise relatively low bit-rate signals, e.g. around 100 Mb/s, so that dispersion and power budget for the management signals do not restrict the maximum distance between Managed Network Elements.

Advantageously, the transmission format of the management signals may comprise standard local-area network protocols, e.g. full-duplex 100 Mb/s Fast Ethernet protocols, so that the management channel connections may be implemented using low-cost commodity hardware.

Advantageously, the Management MUX/DEMUX Units 402 (Figure 2), 1202 (Figure 10) should present minimal insertion loss to non-management channels, in order to maximise the power budget available for data signal transmission.

It will be appreciated by the person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or a necessary implication, the word "comprising" is used in the sense of "including", i.e. the features specified may be associated with further features in various embodiments of the invention.

## Claims

1. An optical ring network structure comprising:
- two or more network elements, and
- a single optical fibre connection between each pair of neighbouring network elements for carrying an optical signal,
wherein the ring network structure is arranged in a manner such that, in use, band allocation utilising multiplexing on each single fibre connection is chosen in a manner such that groups of wavelengths for bi-directional data transfer and for bi-directional redundant data transfer for protection respectively are provided on each single fibre connection.

2. An optical ring network structure as claimed in claim 1, wherein the optical ring network structure comprises MUX/DEMUX means located at each network element for multiplexing and de-multiplexing the optical signal, depending on the propagation directions of the respective wavelengths in the optical signal with respect to the MUX/DEMUX means.

3. An optical ring network structure as claimed in claim 2, wherein the MUX/DEMUX means comprises a 3-port circulator disposed to combine counterpropagating traffic from a unidirectional multiplexer means and to a unidirectional de-multiplexer means of the MUX/DEMUX means.

4. An optical ring network structure as claimed in claim 2, wherein the MUX/DEMUX means comprises a bi-directional multiplexer/de-multiplexer means.

5. An optical ring network structure as claimed in any one of the preceding claims, wherein the MUX/DEMUX means comprises a dense WDM MUX/DEMUX and a coarse WDM MUX/DEMUX, wherein the coarse WDM MUX/DEMUX is disposed in a manner such that, in use, it drops and adds certain wavelength bands at the network element to and from the fibre connections to further demultiplexing and from multiplexing by the dense WDM MUX/DEMUX.

6. An optical ring network structure as claimed in any one of the preceding claims, wherein the optical ring network structure is arranged in a manner such that the data transfer and the redundant data transfer are transmitted concurrently.

7. An optical ring network structure as claimed in claim 6, wherein the ring network structure comprises means for selecting between receipt of either the data transfer or the redundant data transfer located at each network element.

8. An optical ring network structure as claimed in claim 7, wherein the means for selecting comprises a switch.

9. An optical ring network structure as claimed in claim 7, wherein the means for selecting comprises amplifiers for the received data transfer and the received redundant data transfer respectively.

10. An optical ring network structure as claimed in any one of claims 1 to 5, wherein the optical ring network structure is arranged in a manner such that the redundant data transfer is transmitted only in response to a failure.

11. An optical ring network structure as claimed in claim 10, wherein the optical ring network structure is arranged in a manner such that pre-emptible data is being transmitted on the groups of wavelengths provided for the redundant data transfer when the optical ring network structure is in normal operation.

12. An optical ring network structure as claimed in claims 10 or 11, wherein the system comprises switching means located at each network element for switching from data transfer to redundant data transfer.

13. An optical ring network structure as claimed in claim 12, wherein the switching means is disposed between the dense WDM MUX/DEMUX and the coarse WDM MUX/DEMUX.

14. An optical ring network structure as claimed in any one of the preceding claims, wherein the propagation directions of alternating groups of wavelengths with respect to the ring network structure are opposed to one another.

15. An optical ring network structure as claimed in claim 14, wherein the groups of wavelengths each comprise a single transmission channel.

16. An optical ring network structure as claimed in claim 14, wherein each group of wavelengths comprises a band of transmission channels.

17. An optical ring network structure as claimed in any one of the preceding claims. wherein the optical ring network structure comprises two or more optical fibre connections between each pair of neighbouring network elements, wherein the ring network structure is arranged in a manner such that, in use, band allocation utilising multiplexing on each one of the single fibre connections between each of the pairs is chosen in a manner such that groups of wavelengths for bi-directional data transfer and for bi-directional redundant data transfer for protection respectively are provided on each single fibre connection.

18. A method of distributing data on a optical ring network structure, the optical ring network structure comprising two or more network elements, the method comprising the step of:
- distributing a bi-directional multiplexed optical signal on single optical fibre connections between each pair of neighbouring network elements,
wherein band allocation utilising multiplexing on each single fibre connection is performed in a manner such that groups of wavelengths for bi-directional data transfer and for bi-directional redundant data transfer for protection respectively are provided on each single fibre connection.
